# EUROPÄISCHE PATENTSCHRIFT

(11) **EP 2 181 416 B1**
(45) Veröffentlichungstag und Bekanntmachung des Hinweises auf die Patenterteilung: **25.01.2023**
(21) Anmeldenummer: 08785741.3
(22) Anmeldetag: 28.08.2008
(51) Int. Cl.: G06K 9/00, G08G 1/16

(54) **VERFAHREN UND ANORDNUNG ZUR AUSWERTUNG VON HELLIGKEITSWERTEN IN SENSORBILDERN BEI BILDAUSWERTENDEN UMFELDERKENNUNGSSYSTEMEN**
METHOD AND SYSTEM FOR EVALUATING BRIGHTNESS VALUES IN SENSOR IMAGES OF IMAGE-EVALUATING ADAPTIVE CRUISE CONTROL SYSTEMS
PROCÉDÉ ET SYSTÈME POUR ÉVALUER DES VALEURS DE LUMINOSITÉ SUR DES IMAGES DÉTECTÉES, POUR SYSTÈMES DE RECONNAISSANCE D'ENVIRONNEMENT À INTERPRÉTATION D'IMAGES

(30) Priorität: 29.08.2007 US 966757 P
(43) Veröffentlichungstag der Anmeldung: 05.05.2010
(73) Patentinhaber: Valeo Schalter und Sensoren GmbH, 74321 Bietigheim-Bissingen (DE)
(72) Erfinder: KUEHNLE, Andreas, Villa Park, CA 92861 (US); BOON, Cathy, Orange, CA 92867 (US)
(74) Vertreter: Withopf, Kristina
(86) Internationale Anmeldenummer: PCT/EP2008/007045
(87) Internationale Veröffentlichungsnummer: WO 2009/030423

(56) Entgegenhaltungen:
- US-A1- 2006 077 070
- US-A1- 2006 106 518
- ERNST D DICKMANNS ED - ERNST D DICKMANNS: "Dynamic Vision for Perception and Control of Motion, chapter 7: Beginnings of spatiotempral road and ego-state recognition" DYNAMIC VISION FOR PERCEPTION AND CONTROL OF MOTION, [Online] 2. Juni 2007 (2007-06-02), Seiten 205-226, XP008102405 Heidelberg, Germany ISBN: 978-1-84628-637-7 Gefunden im Internet: URL:http://www.springerlink.com/content/97 8-1-84628-637-7> [gefunden am 2009-02-18]

## Beschreibung

### Stand der Technik

Die Erfindung betrifft ein Verfahren und eine Anordnung zur Auswertung von Helligkeitswerten in Sensorbildern eines bildauswertenden Umfelderkennungssystems, insbesondere zum Beispiel zur Erkennung von Teerfugen oder Teerstreifen in oder auf der Fahrbahn bei Fahrassistenzsystemen in Kraftfahrzeugen sowie ein Computerprogrammprodukt.

Solche Fahrassistenzsysteme dienen der Unterstützung eines Fahrers eines Kraftfahrzeugs bei der Durchführung bestimmter Vorgänge im Straßenverkehr und werden bereits für unterschiedlichste Aufgaben eingesetzt. Beispielsweise ist aus der DE 10 2004 017 890 A1 bekannt, dass mit einem sogenannten LIDAR-Radarsensor ein vorgegebener Bereich in der Fahrtrichtung voraus des Fahrzeugs hinsichtlich bestimmter Objekte detektiert wird und durch eine entsprechende Auswertung der Sensorsignale rechtzeitig bestimmte Sicherheitsfunktionen ausgelöst werden können.

Diese an sich bekannten Systeme können beispielsweise im Rahmen einer adaptiven Fahrgeschwindigkeits- und/oder Abstandsregelung eines Fahrzeugs eingesetzt werden, wobei eine solche Regelung dann ohne Eingriff durch den Fahrer eine zuvor eingestellte Fahrgeschwindigkeit und/oder einen zuvor eingestellten Abstand zu einem vorausfahrenden Fahrzeug oder zu sich in Fahrtrichtung befindlichen Gegenständen und/ oder Objekten durchgeführt werden kann. Dies geschieht in der Regel unter entsprechender Berücksichtigung des Umfelds des Fahrzeuges und gegebenenfalls weiterer Parameter wie beispielsweise den Witterungs- und Sichtbedingungen. Eine solche Regelung wird oft auch als Adaptive-Cruise-Control-System (ACC-System) bezeichnet. Das ACC-System muss insbesondere mit Blick auf die steigende Verkehrsdichte der heutigen Zeit flexibel genug sein, um auf alle Fahrsituationen geeignet zu reagieren. Dies erfordert wiederum eine entsprechende Objektdetektionssensorik, um in jeder Fahrsituation die für die Regelung notwendigen Messdaten zu liefern.

Hierzu werden, beispielsweise gemäß der DE 102 43 620 A1, auch Kamera- oder Videobilder bei bildauswertenden oder auch sogenannten visionbasierenden Fahrassistenzsystemen zur Umfelderfassung verwendet, wobei bei den bekannten Systemen aus den Kamerabildern Objekte, Hindernisse, Fahrbahn- und Fahrspurbegrenzungen sowie Abstände hierzu bestimmt werden. Zur eigentlichen Bilderfassung werden in visionbasierenden Umfelderfassungssystemen als Imager bezeichnete Bildsensoren eingesetzt, welche dann ein auch als Sensorbild bezeichnetes Kamerabild der erfassten Umgebung liefern, deren Bildpunkte (Pixel) oder Bildbereiche hinsichtlich Intensität, Kontrast, Farbe oder sonstiger Parameter mit entsprechenden datenverarbeitenden Mitteln ausgewertet werden können.

Solche videobasierten Fahrassistenzsysteme werden in Fahrzeugen angewendet, um eine Vielzahl von Funktionen, wie eine Warnung hinsichtlich einer Fahrbahnausfahrt oder -abbiegung durchzuführen. Diese Funktionen erfordern häufig, dass Teile des Sensorbildes, z. B. ein Verkehrszeichen, eine Brücke, eine Wegmarkierung, etc. als solches eindeutig identifiziert werden kann.

Auch eine Erkennung von irregulären Fahrbahnoberflächenbereichen, wie zum Beispiel Teerstreifen als Folge von partiellen Fahrreparaturen, im Unterschied zu den normalen Straßenmarkierungen, ist oft für die Fahrsicherheit des Fahrzeugs und die optimale Funktion des Fahrassistenzsystems von Bedeutung und sollte als solches im Sensorbild erkannt und unterschieden werden, besonders auch im Rahmen einer Fahrbahnabfahrtswarnung. Es wird dabei vorausgesetzt, dass die Kamera mindestens vorwärts in Fahrtrichtung des Fahrzeugs die Fahrbahn abbildet.

Die Veröffentlichung ERNST D DICKMANNS "Dynamic Vision for Perception and Control of Motion, chapter 7: Beginnings of spatiotemporal road and ego-state recognition" DYNAMIC VISION FOR PERCEPTION AND CONTROL OF MOTION, [Online] 2. Juni 2007, Seiten 205-226, XP0081402405 Heidelberg, Germany, ISBN: 978-1-84628-637-7 offenbart Fachwissen zu raumzeitlichen Straßenerkennung und Eigenzustandserkennung.

US 2006/106518 A1 offenbart Verbesserungen in Fahrzeugvisionsystemkomponenten, Fahrzeugvisionsystemen und Fahrzeugausstattungssteuersysteme, die die Visionsystemkomponenten und Visionsysteme verwenden.

### Offenbarung der Erfindung

Die Erfindung betrifft die Gegenstände der unabhängigen Patentansprüche. Vorteilhafte Ausführungsformen ergeben sich aus den abhängigen Ansprüchen, der Beschreibung und den Figuren.

Die Erfindung geht von einem Verfahren zur Auswertung von Sensorbildern eines bildauswertenden Umfelderkennungssystems an einem Träger, vorzugsweise ein Fahrzeug, aus, der sich auf einer Fahrbahn bewegt und bei dem als Unregelmä-ßigkeiten auf der Fahrbahn angebrachte Teerstreifen oder Teerfugen aufgrund ihrer Helligkeit dahingehend ausgewertet werden, dass sie von den die vorgegebene Fahrbahnführung betreffenden Markierungen unterschieden werden, dadurch, dass die Breite der Unregelmäßigkeiten der Oberfläche der Fahrbahn in jeder Bildreihe des Sensorbildes aufgrund der Helligkeit berechnet wird. Es wird ausgewertet, ob die Breite in der Bewegungsrichtung des Trägers eine vorgegebene Schwankung überschreitet.

Zusätzlich können Unregelmäßigkeiten der Oberfläche der Fahrbahn aufgrund ihrer geometrischen Ausdehnung, ihres Kontrasts und/oder ihrer Reflexionsfähigkeit in vorteilhafter Weiser dahingehend ausgewertet werden, dass sie von den die vorgegebene Fahrbahnführung betreffenden Markierungen unterschieden werden.

Solche Unregelmäßigkeiten sind insbesondere Teerstreifen auf der Fahrbahn nach Reparaturarbeiten, die bestimmte Eigenschaften aufweisen, die für eine Bildauswertung ausgenutzt werden können. Zum Beispiel können in vorteilhafter Weise als solche Unregelmäßigkeiten der Oberfläche der Fahrbahn Pixel, eine Reihe oder ein Bereich von Pixeln des Sensorbildes in ihren Helligkeitswerten daraufhin ausgewertet werden, ob sie in der Bewegungsrichtung des Trägers eine vorgegebene Schwankungsbreite in ihrer Breite und/oder Länge überschreiten.

Teerstreifen zum Beispiel haben eine verhältnismäßig große Veränderung in der Breite, da sie als unregelmäßige Reparaturflächen aufgetragen werden und dabei nicht so exakt bemessen sind wie Wegmarkierungen. Es kann dies dahingehend ausgenutzt werden, dass die Breite eines möglichen Teerstreifens in jeder Bildreihe berechnet wird und die Veränderung der Breite unter Verwendung eines Mittelwerts und der absoluten Abweichung festgestellt wird. Zum Beispiel ist eine mittlere absolute Breitenveränderung im Bereich von 3 bis 5 cm oder mehr so stark, dass hier ein Teerstreifen detektiert werden kann.

Eine praktische Methode für das Messen der Breitenveränderung eines solchen Teerstreifens auf der Fahrbahn kann an den Rändern auch mit einer sogenannten Subpixel-Messung erfolgen, die die Genauigkeit der Messung erhöht. Die Subpixelmessung kann dabei auf nur einem Teil des Sensorbildes stattfinden, der ein entfernten Abschnitts betrifft, wo einzelne Pixel einen größeren Fahrbahnbereich bedecken, um Bearbeitungszeit zu sparen. Außerdem kann die Subpixel-Messung auch mit Hilfe einer Nachschlagtabelle erfolgen, die dann zwar nur einen ungefähren aber nichtsdestoweniger ausreichenden Wert ergibt. Da die Subpixel-Messung insbesondere den Rand und seine Nähe überprüft, erkennt man gleichzeitig die Steigung der Helligkeitswerte und erreicht dadurch eine verbesserte Erfassung der Randposition und eine Klassifikation des Randes hinsichtlich der Erkennung einer Markierung oder eines Teerstreifens.

Als Unregelmäßigkeiten der Oberfläche der Fahrbahn können somit solche Pixel, eine Reihe oder ein Bereich von Pixeln des Sensorbildes erkannt werden, die einen vorgegebenen Helligkeitswert und/oder Kontrast überschreiten.

Die zuvor beschriebenen Teerstreifen sind unter Umständen heller als der Hintergrund, auf dem sie aufgetragen sind, weil sie stärker reflektieren. Ein Kriterium für die Auswertung kann dabei sein, dass der mittlere Kontrast zwischen dem Teerstreifen und dem Hintergrund eine vorgegebene Schwelle übersteigt, sowohl auf der linken und der rechten Seite des Teerstreifens. Die davon zu unterscheidenden Fahrbahnmarkierungen glänzen dabei nicht so hell, obwohl ebenso belichtet. Es entstehen somit drei Kategorien von Helligkeiten bei den Pixeln in einem Histogramm bei der Auswertung des Sensorbildes, nämlich bezüglich der Straße mit dunklem Hintergrund, der relativ helleren Fahrbahnmarkierungen und dem sehr hellen Teerstreifen. Diese Kategorien können für die hier beschriebene Kennzeichnung herangezogen werden.

Es kann auch zum Beispiel herangezogen werden, dass die eingestellte oder eingeregelte Empfindlichkeit und/oder die Verstärkung bei der Bildauswertung der Pixel einen vorgegebenen Wert unterschreitet. Häufig haben solche Teerstreifen an den Nähten zwischen zwei Fahrspuren auf der Fahrbahn einen hohen mittleren Kontrast im Verhältnis zu dem Hintergrund auf beiden Fahrspuren.

Die zuvor beschriebenen an sich dunklen Teerstreifen sehen bei häufigen Lichtbedingungen auf der Fahrbahn dann relativ hell aus, wenn die Sonne von einer ungünstigen Richtung, wie von vorn oder seitlich zu dem Umfelderkennungssystem steht, dann kann sie den relativ öligen Teerstreifen veranlassen zu glänzen oder sehr hell auszusehen. Diese hellen Teerstreifen können ein videobasiertes Umfelderkennungssystem zu Fehlinterpretationen veranlassen, das nach ebenfalls in einem bestimmten Maß hellen Fahrbahnmarkierungen sucht. Mit den hier beschriebenen Verfahren wird somit ein Belichtungszustand im Umfelderkennungssystem erfasst, bei dem die Empfindlichkeit überprüft wird. Wenn die Belichtungszeit bei der Empfindlichkeitsregelung sehr kurz ist und die Bildverstärkung gering ist, dann kann man davon ausgehen, dass es sich hier um glänzende Teerstreifen als Unregelmäßigkeiten handelt.

Unregelmäßigkeiten, insbesondere Teerstreifen auf der Fahrbahn können auch auf einfache Weise dadurch erfasst werden, wenn bei einem steilen Einfallswinkel der Lichtstrahlen in das bildauswertende Umfelderkennungssystem, die Teerstreifen dann wesentlich dunkler sind als ihre Umgebung. Solche Teerstreifen erscheinen relativ dunkel bzw. schwarz, wenn die optische Achse stark von der Erfassungsrichtung abweicht, das heißt, wenn die optische Achse relativ steil nach unten zeigt, ändert sich die Helligkeit des Teerstreifens vom glänzenden Hell zum Schwarzen. Allerdings ist hierbei zu berücksichtigen, dass eine solche nach unten gerichtete optische Achse nur sehr schwer zu realisieren ist, die die Motorhaube des Fahrzeugs häufig im Weg steht.

Praktisch kann eine Kennzeichnung einer hellen Szene durch das Suchen nach einer sogenannten schwarzen Sonne erfolgen, wobei es sich hier um eine künstliche Sensorbilderscheinung handlet, bei der der hellste Teil der Sonne in einem Bild so umgewandelt wird, sodass diese aussieht wie ein schwarzer Kreis über dem Horizont. Der Bereich um den schwarzen Kreis der Sonne muss dann völlig hell sein, damit die Sonne als solche erkannt werden kann.

Es ist mit dem hier beschriebenen Verfahren auch möglich, Unregelmäßigkeiten der Oberfläche der Fahrbahn dann zu ermitteln, wenn in der Bewegungsrichtung des Trägers und/oder an den Seiten ein linearer oder sonst wie fließender Übergang, insbesondere ein bestimmtes Graustufenprofil, von einem hellen zu einem dunklen Bereich erfasst wird. Ein Übergang zwischen dem Teerstreifen und dem Hintergrund kann dahingehend analysiert werden, dass der Teerstreifen anders als eine Markierung eventuell eine kontinuierliche Steigerung der Helligkeit im Übergangsbereich zur Fahrbahn aufweist, da Helligkeitsänderungen bei Markierungen in der Regel dagegen sehr steil verlaufen.

Teerstreifen als Unregelmäßigkeiten treten häufig in relativ langen Abschnitten auf, wie zum Beispiel an der Naht zwischen zwei verschiedenen Fahrbahnmaterialien. Der Verlauf dieser Abschnitte ist nicht notwendigerweise durchgehend perfekt ausgeführt und so sollte zunächst die längste Länge eines solchen Abschnitts und die eventuell entstandenen Zwischenräume zwischen den Abschnitten erfasst werden. Mit einer Auswertung dieser Daten ist eine Unterscheidung der Teerstreifen von regelmäßigen gestrichelten Fahrbahnmarkierungen leicht durchzuführen. Hierbei sind relativ kurze Teerstreifenabschnitte im Allgemeinen nicht so beachtenswert, da sie in der Regel nicht zu einer Änderung bei der Spurhaltung eines Fahrzeugs mit dem Umfelderkennungssystem führen müssen.

Bei einer erfindungsgemäßen Anordnung zur Durchführung des zuvor beschriebenen Verfahrens enthält das bildauswertende Umfelderkennungssystem die schon erwähnte elektronische Kamera, die an einem ein Spurhalteunterstützungssystem aufweisenden Fahrzeug als Träger angebracht ist und den in Fahrtrichtung vorderen Bereich des Fahrzeugs auf einer Fahrbahn derart fortlaufend erfasst, dass jeweils ein aus Pixeln aufgebautes Sensorbild vorhanden ist, deren Helligkeits- und gegebenenfalls Farbwerte die Umgebung abbilden. Ferner ist eine Auswerteeinheit, in der Regel mit einem programmgesteuerten Computer, vorhanden, in der als Unregelmäßigkeiten auf der Fahrbahn angebrachte Teerstreifen oder Teerfugen aufgrund ihrer Helligkeit dahingehend ausgewertet und signalisiert werden, dass sie von die vorgegebene Fahrbahnführung betreffenden Markierungen unterschieden werden, dadurch, dass die Breite der Unregelmäßigkeiten der Oberfläche der Fahrbahn in jeder Bildreihe des Sensorbildes aufgrund der Helligkeit berechnet wird. Es wird ausgewertet, ob die Breite in der Bewegungsrichtung des Trägers eine vorgegebene Schwankung überschreitet.

Zusätzlich können Unregelmäßigkeiten der Oberfläche der Fahrbahn aufgrund ihrer geometrischen Ausdehnung, ihres Kontrasts und/oder ihrer Reflexionsfähigkeit dahingehend ausgewertet und signalisiert werden, dass sie von den die vorgegebene Fahrbahnführung betreffenden Markierungen unterschieden werden können.

### Kurze Beschreibung der Zeichnung

Ein Ausführungsbeispiel wird in den Figuren der Zeichnung dargestellt und nachfolgend erläutert. Es zeigen:
Figur 1 eine schematische Darstellung eines Fahrzeugs mit Kameras als Bestandteil eines Umfelderkennungssystems, hier zur Auswertung von Teerstreifen auf der Fahrbahn, und
Figur 2 ein Blockschaltbild einer Auswerteeinheit des Umfelderkennungssystems.

### Beschreibung des Ausführungsbeispiels

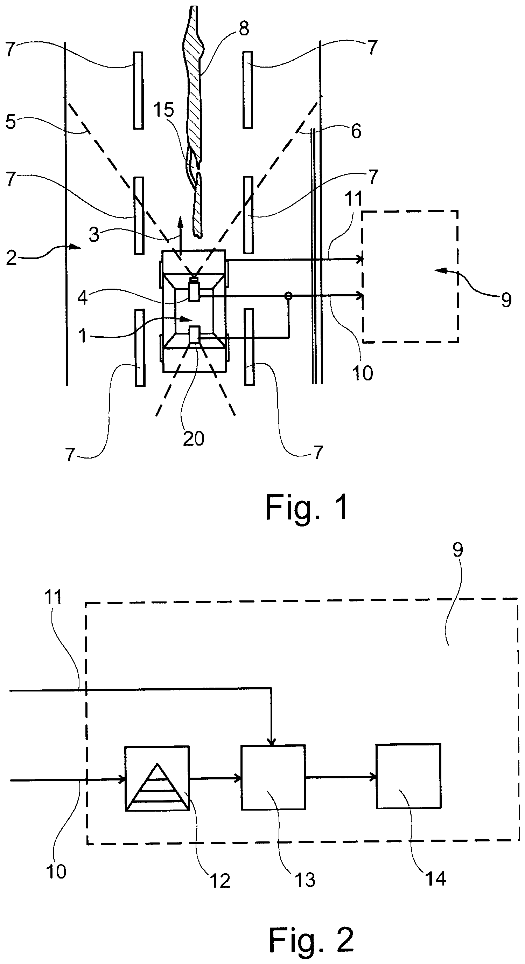

Aus Figur 1 ist schematisch eine Situation eines Fahrzeugs 1 als beweglicher Träger eines Umfelderkennungssystems erkennbar, das sich auf einer Fahrbahn 2 in Richtung des Pfeiles 3 bewegt. Das Umfelderkennungssystem des Fahrzeugs 1 weist eine Kamera 4, insbesondere eine digitale Videokamera auf, die einen Bereich zwischen gestrichelten Linien 5 und 6 erfasst. Auf der Fahrbahn 2 sind Markierungen 7 angebracht, die eine regelmäßige Linienführung aufweisen. Im Gegensatz dazu sind Unregelmäßigkeiten der Oberfläche der Fahrbahn 2 in der Figur 1 zu erkennen, die dahingehend ausgewertet werden, dass sie von die vorgegebene Fahrbahnführung betreffenden Markierungen 7 unterschieden werden können.

Die Unregelmäßigkeit nach der Figur 1 ist hier durch einen Teerstreifen 8 als Naht zwischen zwei separat hergestellten Fahrbahnstreifen auf der Fahrbahn 2 gebildet, die bestimmte optische Eigenschaften aufweisen, die für eine Bildauswertung ausgenutzt werden können. In einer Auswerteeinrichtung 9 werden daher an einem Eingang 10 die digitalen Daten des aus Pixeln bestehenden Sensorbildes bzw. eines Bereichs des Sensorbildes der Kamera 4 und zusätzlich zum Beispiel an einem Eingang 11 auch die aktuellen Geschwindigkeitsdaten des Fahrzeugs 1 ausgewertet.

Beim gezeigten Ausführungsbeispiel ist noch eine zweite optionale rückwärtige Kamera 20 angeordnet, die Ihr Ausgangssignal auch der Auswerteeinrichtung 9 zur Verfügung stellt und dabei den mit der vorderen Kamera 4 erkannten Teerstreifen 8 dunkel sieht. Somit kann überprüft werden, ob der Gegenstand, der als Markierung 7 identifiziert ist, noch hell aussieht, denn der Teerstreifen 8 ist dunkel, wenn er von der der Sonne abgewandten Seite angesehen wird. Dieses System kann in zwei Modi benutzt werden. Erstens kann die rückwärts schauende Kamera 20 den Gegenstand des Interesses und seine Positionen kennzeichnen, der dann mit der nach vorn schauenden Kamera 4 verifiziert wird oder zweitens kann die vorausschauende Kamera 4 die Gegenstände lokalisieren und diese werden mit der rückwärtigen schauenden Kamera 20 eventuell bestätigt.

Hierbei kann auch mit einem aufgeteilten Bild gearbeitet werden (Splitting Image) sodass hiermit zum Beispiel eine Markierung- oder Teerstreifenerkennung im aufgeteilten Bild erfolgt, wenn die vorwärts schauende Kamera 4 mit einer entsprechenden Optik ein vorwärtiges und ein rückwärtiges Bild empfängt. Es können auch zwei solcher hier nicht gezeigten Kameras am Fahrzeug 1 angebracht werden, eine auf der linken und eine auf der rechten Seite. Die Analyse, ob ein Gegenstand eine Markierung 7 oder ein Teerstreifen 8 ist, ist erfolgt dann wir zuvor beschrieben.

In Figur 2 ist die Auswerteeinrichtung 9 nach der Figur 1 detaillierter gezeigt, wobei in einem ersten Baustein 12 die Daten des Sensorbildes der Kamera 4 und ggf. der Kamera 20 hinsichtlich des Auftretens von auswertbaren Helligkeitswerten in vorgegebenen Erfassungsbereichen ROI (ROI = region of interest) ausgewertet und aus diesen Ergebnissen wird dann eventuell auch unter Hinzuziehung der Geschwindigkeitsdaten des Eingangs 11 in einem Baustein 13 die Erkennung des Teerstreifens 8 nach der Figur 1, wie nachfolgend erläutert, durchgeführt und in einer Anzeigevorrichtung 14 angezeigt oder mit entsprechenden Mitteln signalisiert.

Im Folgenden werden die bei der Bildauswertung heranzuziehenden auszuwertenden Eigenschaften der Teerstreifen 8 kurz erläutert, wobei diese Eigenschaften nicht zwangsläufig alle oder teilweise zusammen ausgewertet werden oder auftreten müssen und oft auch zum Teil in bestimmten Situationen nicht anwendbar sind:

### Eigenschaft 1

- Die Teerstreifen 8 erscheinen in der Regel auf dem Teer der Fahrbahn 2 unter den meisten Beleuchtungsbedingungen relativ dunkel. Wenn die Sonne jedoch aus einer ungünstigen Richtung auf die Fahrbahn scheint, zum Beispiel von vorn oder von der Seite bezüglich der Kamera 4, dann kann sie den oft relativ öligen Teerstreifen 8 dazu veranlassen, zu glänzen und damit sehr hell auszusehen. Diese dann relativ hellen Teerstreifen 8 können das videobasierte Umfelderkennungssystem jedoch eventuell verwirren, da dieses nach ähnlich aussehenden normal hellen Markierungen auf der Fahrbahn 2 sucht. In der Auswerteeinheit 8 wird somit nach dem entsprechenden Belichtungszustand gesucht, indem die Belichtungssteuerung analysiert wird. Wenn die Belichtungsdauer sehr kurz ist, und/oder die Verstärkung niedrig ist, dann können glänzende Teerstreifen 8 erkannt werden.

### Eigenschaft 2

- Zum Beispiel können auch in vorteilhafter Weise als solche Unregelmäßigkeiten der Oberfläche der Fahrbahn Pixel, eine Reihe oder ein Bereich von Pixeln des Sensorbildes in ihren Helligkeitswerten daraufhin ausgewertet werden, ob sie in der Bewegungsrichtung des Fahrzeugs 1 eine vorgegebene Schwankungsbreite in ihrer Breite und/oder Länge überschreiten. Der Teerstreifen 8 nach der Figur 1 weist erkennbar eine verhältnismäßig gro-ße Veränderung in der Breite auf, da er als unregelmäßige Reparaturfläche aufgetragen ist und dabei nicht so exakt bemessen sind wie die Markierungen 7. Somit wird dies dahingehend ausgewertet, dass die Breite des Teerstreifens 8 in jeder Bildreihe berechnet wird und die Veränderung der Breite unter Verwendung eines Mittelwerts und der absoluten Abweichung festgestellt wird. Zum Beispiel ist eine mittlere absolute Breitenveränderung im Bereich von 3 bis 5 cm oder mehr so stark, dass hier der Teerstreifen 8 als solcher detektiert werden kann.

### Eigenschaft 3

- Der Teerstreifen 8 nach der Figur 1 ist in einem relativ langen Abschnitt an der Naht zwischen zwei verschiedenen Fahrbahnstreifen oder auch Beschichtungs- oder Pflasterungsarten der Fahrbahn 2 aufgetragen. Der Durchgang bei einzelnen Abschnitten ist hier nicht vollkommen homogen oder fließend. Man kann so die längste Länge ermitteln, in der der Abdruck gesehen wird und bei auftretenden Abständen zwischen den Abschnitten das Überschreiten eines bestimmten Maßes detektieren. Damit sind die gestrichelten Markierungen 7 von den ermittelten eventuellen Abständen im Teerstreifen 8 zu unterscheiden. Wenn allerdings kurze Abschnitte des Teerstreifens 8 erfasst werden, so sind diese im Allgemeinen nicht so wichtig für das Umfelderkennungssystem, da es unwahrscheinlich ist, dass dadurch durch das Umfelderkennungssystem überhaupt eine Markierung in Betracht zieht, die eine Änderung bei der Spurhaltung des Fahrzeugs 1 nach sich ziehen würde.

### Eigenschaft 4

- Weiterhin kann der Teerstreifen 8 im Sensorbild der Kamera 4 auch dadurch erkannt werden, das ein vorgegebener Helligkeitswert und insbesondere Kontrast überschritten ist. Wie schon bei der Eigenschaft 1 erwähnt, glänzt der Teerstreifen 8 dann heller als die Fahrbahn 2, wenn er das Sonnenlicht reflektiert. Hieraus kann ein Erkennungskriterium derart abgeleitet werden, dass der mittlere Kontrast zwischen dem Teerstreifen 8 und dem Hintergrund der Fahrbahn 2 eine vorgegebene Schwelle übersteigt, und zwar auf beide Seiten des Teerstreifens 8. Die Markierungen 7 nach der Figur glänzen, obwohl ebenso gut belichtet, nicht so hell und dadurch können drei Kategorien von Pixel in einem Histogramm der Fahrbahn 2 erfasst werden: a) Fahrbahn 2 als dunkler Hintergrund, b) hellere Markierungen 7, c) der sehr helle Teerstreifen 8. Diese Kategorien können für eine Kennzeichnung herangezogen werden. Der Übergang zwischen dem Teerstreifen 8 und dem Hintergrund der Fahrbahn 2 kann dabei ebenfalls analysiert werden. Dadurch, dass der Teerstreifen 8 anders als die Markierungen 7 erscheint, da seine Substanz glänzend ist, kann eine auch weitere Entscheidung, ob es ein Teerstreifen 8 ist oder nicht, auch von den Helligkeitsänderungen an seinen Seiten ermittelt werden, da diese dazu neigen, steiler als bei einer normalen Markierung 7 zu verlaufen.

### Eigenschaft 5

- Der Teerstreifen 8 nach der Figur 1 kann auch dadurch erfasst werden, dass bei einem steilen Einfallswinkel der Lichtstrahlen in das bildauswertende Umfelderkennungssystem, der Teerstreifen 8 dunkler sind als die Umgebung aussieht. Solch ein Teerstreifen 8 erscheint relativ dunkel bzw. schwarz, wenn dann die optische Achse stark von der Erfassungsrichtung abweicht, das heißt, wenn die optische Achse relativ steil nach unten zeigt ändert sich die Helligkeit des Teerstreifens von glänzend Hell zu Schwarz.

### Eigenschaft 6

- Weiterhin kann auch durch eine Analyse sonstiger Unterschiede zwischen dem Teerstreifen 8 und den Markierungen 7 eine Erkennung stattfinden, zum Beispiel kann durch ein Betrachten des relativ plötzlichen Anfangs einer Markierung 7 und durch das Betrachten des Graustufenprofils zwischen den Seiten der Markierung 7 eine solche erkannt werden.

### Eigenschaft 7

- Für gestrichelte Markierungen 7 ist der Anfang der Markierung 7 in Fahrtrichtung im Allgemeinen eine klare Linie, die ungefähr senkrecht zur Fahrtrichtung gemäß des Pfeils 3 verläuft. Beim Teerstreifen 8, der unregelmäßig auf die Fahrbahn 2 aufgetragen ist, ist dieser Anfang weniger linear. Somit kann das Messen dieser Linearitäten und des Winkels zum Beispiel einer beginnenden Markierung 7 eine klare Aussage darüber geben, ob es sich um eine normale Markierung 7 oder um den Teerstreifen 8 handelt.

### Eigenschaft 8

- Die Teerstreifen 8 sind in der Regel Reparaturen auf der Fahrbahn 2 und eventuell Fugenfüller. Beim in der Figur 1 gezeigten Teerstreifen ist in einem Bereich 15 erkennbar, dass es sich hier um zwei teilweise separierte Streifen handelt, mit einem schmalen dunklen Bereich in der Mitte. Normale Markierungen 7 weichen von diesem Aussehen erheblich ab, sodass in der Auswerteeinheit 9 nach einem genügend schmalen dunklen Bereich gesucht wird. Hierbei können Schwellen vorgegeben werden, hinsichtlich der Breite dieses Bereichs, der Dunkelheit (ev, entsprechend der Fahrbahn 2) und der Länge des Abschnitts 15 (im Vergleich zu den Unterbrechungen der Markierungen 7), die einen Hinweis darauf geben, dass der Gegenstand ein Teerstreifen 8 ist. Weiterhin kann auch eine Breitenveränderung der dunklen Lücke im Abschnitt 15 einen Hinweis darauf geben, dass es sich um einen Teerstreifen handelt.

Eine Kombination oder Unterkombination dieser zuvor genannten Eigenschaften ermöglicht mit entsprechend angepassten Schwellen eine erste Klassifikation eines mit dem Umfelderkennungssystem erfassten Gegenstandes auf der Fahrbahn 2 dahingehend, ob es sich um einen Teerstreifen 8 handelt oder nicht. Mann kann hier mit einem Zeitfilter die Eigenschaften selbst und/oder die Reihenfolge des Auftretens der Eigenschaften auswerten und schon eine erste grobe Entscheidung sehr frühzeitig treffen. Es muss hierbei lediglich gefordert werden, dass eine genügende Anzahl von Messergebnissen in einem genügenden Zeitraum vorlagen, um eine zuverlässige Entscheidung zu treffen. In Situationen, in denen mehrfache Markierungen 7 derart vorhanden sind, dass dies zu einem unkontrollierten Springen von einer Markierung 7 zu einem Teerstreifen 8 führen könnte, solle die Erkennung der Teerstreifen 8 ausgesetzt werden. Ergänzend wird erwähnt, dass das Fahrzeug 1, das das Umfelderkennungssystem trägt, vorzugsweise mit Fahrerassistenzsystemen, und hierbei insbesondere mit einem Spurhalteunterstützungssystem ausgerüstet ist, das die mit dem Umfelderkennungssystem gewonnenen Informationen für seine Funktion nutzt.

## Patentansprüche

1. Verfahren zur Auswertung von Sensorbildern eines bildauswertenden Umfelderkennungssystems an einem Träger, der sich auf einer Fahrbahn (2) bewegt, wobei als Unregelmäßigkeiten auf der Fahrbahn (2) angebrachte Teerstreifen (8) oder Teerfugen aufgrund ihrer Helligkeit dahingehend ausgewertet werden, dass sie von den die vorgegebene Fahrbahnführung betreffenden Markierungen (7) unterschieden werden, dadurch, dass die Breite der Unregelmäßigkeiten der Oberfläche der Fahrbahn (2) in jeder Bildreihe des Sensorbildes aufgrund der Helligkeit berechnet wird, und **dadurch gekennzeichnet, dass** ausgewertet wird, ob die Breite in der Bewegungsrichtung des Trägers eine vorgegebene Schwankung überschreitet.

2. Verfahren nach Anspruch 1, **dadurch gekennzeichnet, dass** als Überschreitung der Schwankung eine Abweichung von mehr als 3 bis 5 cm erfasst wird.

3. Verfahren nach Anspruch 1, **dadurch gekennzeichnet, dass** die Unregelmäßigkeiten der Oberfläche der Fahrbahn in ihren Helligkeitswerten daraufhin ausgewertet werden, ob sie einen vorgegebenen Kontrast überschreiten.

4. Verfahren nach einem der vorhergehenden Ansprüche, **dadurch gekennzeichnet, dass** der mittlere Kontrast zwischen den Unregelmäßigkeiten und dem Hintergrund eine vorgegebene Schwelle übersteigt, sowohl auf der linken und der rechten Seite der Unregelmäßigkeiten.

5. Verfahren nach einem der vorhergehenden Ansprüche, **dadurch gekennzeichnet, dass** die Unregelmäßigkeiten der Oberfläche der Fahrbahn in ihren Helligkeitswerten daraufhin ausgewertet werden, ob sie einen vorgegebenen Helligkeitswert überschreiten.

6. Verfahren nach einem der vorhergehenden Ansprüche, **dadurch gekennzeichnet, dass** bei der Bildauswertung der Beleuchtungszustand ausgewertet wird, indem die Belichtungssteuerung der Kamera (4) analysiert wird.

7. Anordnung zur Durchführung eines Verfahrens nach einem der vorhergehenden Ansprüche, wobei das bildauswertende Umfelderkennungssystems mindestens eine elektronische Kamera (4;20) enthält, die an einem ein Spurhalteunterstützungssystem aufweisenden Fahrzeug (1) als Träger angebracht ist und den in Fahrtrichtung vorderen Bereich des Fahrzeugs (1) auf einer Fahrbahn (2) derart fortlaufend erfasst, dass jeweils ein aus Pixeln aufgebautes Sensorbild vorhanden ist, deren Helligkeits- und gegebenenfalls Farbwerte die Umgebung abbilden und dass eine Auswerteeinrichtung (9) vorhanden ist, in der als Unregelmäßigkeiten auf der Fahrbahn (2) angebrachte Teerstreifen (8) oder Teerfugen aufgrund ihrer Helligkeit dahingehend ausgewertet und signalisiert werden, dass sie von die vorgegebene Fahrbahnführung betreffenden Markierungen (7) unterschieden werden, dadurch, dass die Breite der Unregelmäßigkeiten der Oberfläche der Fahrbahn (2) in jeder Bildreihe des Sensorbildes aufgrund der Helligkeit berechnet wird, und **dadurch gekennzeichnet, dass** ausgewertet wird, ob die Breite in der Bewegungsrichtung des Trägers eine vorgegebene Schwankung überschreitet.

8. Anordnung nach Anspruch 7, **dadurch gekennzeichnet, dass** eine zweite rückwärtige Kamera (20) vorhanden ist, wobei entweder die rückwärts schauende Kamera (20) eine Unregelmäßigkeit oder eine Markierung (7) erkennt, die dann mit der nach vorn schauenden Kamera (4) verifiziert wird oder die vorausschauende Kamera (4) lokalisiert die Unregelmäßigkeit oder eine Markierung (7) und diese werden mit der rückwärtigen schauenden Kamera (20) verifiziert.

9. Anordnung nach Anspruch 7, **dadurch gekennzeichnet, dass** die Kamera (4; 20) mit einem aufgeteilten Bild arbeitet, sodass diese mit einer entsprechenden Optik ein Vorwärts- und rückwärts schauendes Bild empfängt.

10. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 6 veranlassen.

## Claims

1. Method for evaluating sensor images of an image-evaluating vicinity detection system on a carrier moving on a roadway (2), wherein tar strips (8) or tar joints disposed in the form of irregularities on the roadway (2) are evaluated on the basis of their brightness to the effect that they are differentiated from the markings (7) relating to the specified roadway guidance by virtue of the fact that the width of the irregularities on the surface of the roadway (2) is computed in each image series of the sensor image on the basis of the brightness, and **characterized in that** an evaluation is performed to determine whether the width in the movement direction of the carrier exceeds a specified variation.

2. Method according to Claim 1, **characterized in that** a deviation of more than 3 to 5 cm is captured as a value exceeding the variation.

3. Method according to Claim 1, **characterized in that** the irregularities on the surface of the roadway are evaluated on the basis of their brightness values to determine whether they exceed a specified contrast.

4. Method according to any of the preceding claims, **characterized in that** the average contrast between the irregularities and the background exceeds a specified threshold both on the left-hand and right-hand sides of the irregularities.

5. Method according to any of the preceding claims, **characterized in that** the irregularities on the surface of the roadway are evaluated on the basis of their brightness values to determine whether they exceed a specified brightness value.

6. Method according to any of the preceding claims, **characterized in that** the lighting state is evaluated during the image evaluation by analysing the exposure control of the camera (4).

7. Arrangement for carrying out a method according to any of the preceding claims, wherein the image-evaluating vicinity detection system contains at least one electronic camera (4; 20), which is mounted as a carrier on a vehicle (1) having a lane-keeping assistance system and continuously captures the front region of the vehicle (1) in the direction of travel on a roadway (2) in a manner such that in each case a sensor image composed of pixels is present whose brightness and possibly colour values image the environment and that an evaluation device (9) is present, in which tar strips (8) or tar joints disposed in the form of irregularities on the roadway (2) are evaluated and signalled on the basis of their brightness to the effect that they are differentiated from markings (7) relating to the specified roadway guidance by virtue of the fact that the width of the irregularities on the surface of the roadway (2) is computed in each image series of the sensor image on the basis of the brightness, and **characterized in that** an evaluation is performed to determine whether the width in the movement direction of the carrier exceeds a specified variation.

8. Arrangement according to Claim 7, **characterized in that** a second, rearwards camera (20) is present, wherein either the rearwards-facing camera (20) detects an irregularity or a marking (7), which is then verified with the forwards-facing camera (4), or the forwards-facing camera (4) localizes the irregularity or a marking (7), and the latter are then verified with the rearwards-facing camera (20).

9. Arrangement according to Claim 7, **characterized in that** the camera (4; 20) operates with a divided image so that said camera receives a forwards-facing and rearwards-facing image using a corresponding optical unit.

10. Computer program product stored on a computer-usable medium, comprising computer-readable program means which, when the computer program product is executed on a microprocessor having associated storage means or on a computer, cause the latter to carry out a method according to any of Claims 1 to 6.

## Revendications

1. Procédé d'évaluation d'images de capteur d'un système de reconnaissance d'environnement par évaluation d'images situé sur un support qui se déplace sur une chaussée (2), des rubans goudronnés (8) ou des joints goudronnés appliqués sous forme d'irrégularités sur la chaussée (2) étant évalués sur la base de leur brillance en ce qu'ils se distinguent des marquages (7) relatifs au guidage au sol spécifié du fait que la largeur des irrégularités de la surface de la chaussée (2) est calculée dans chaque ligne d'image de l'image de capteur sur la base de la brillance, et **caractérisé en ce que** l'on évalue si la largeur dans la direction de déplacement du support dépasse une fluctuation spécifiée.

2. Procédé selon la revendication 1, **caractérisé en ce qu'**un écart de plus de 3 à 5 cm est détecté comme dépassement de la fluctuation.

3. Procédé selon la revendication 1, **caractérisé en ce que** les irrégularités de la surface de la chaussée sont évaluées en fonction de leurs valeurs de brillance pour déterminer si elles dépassent un contraste spécifié.

4. Procédé selon l'une des revendications précédentes, **caractérisé en ce que** le contraste moyen entre les irrégularités et le fond dépasse un seuil spécifié aussi bien du côté gauche que du côté droit des irrégularités.

5. Procédé selon l'une des revendications précédentes, **caractérisé en ce que** les irrégularités de la surface de la chaussée sont évaluées en fonction de leurs valeurs de brillance pour déterminer si elles dépassent une valeur de brillance spécifiée.

6. Procédé selon l'une des revendications précédentes, **caractérisé en ce que** l'état d'éclairage est évalué lors de l'évaluation d'image par analyse de la commande d'éclairement de la caméra (4).

7. Ensemble destiné à mettre en œuvre un procédé selon l'une des revendications précédentes, le système de reconnaissance d'environnement par évaluation d'image contenant au moins une caméra électronique (4 ; 20) qui est montée sur un véhicule (1), servant de support et comportant un système d'avertissement de sortie de voie, et qui détecte en continu la zone avant du véhicule (1) sur une chaussée (2) dans le sens de roulement de manière à avoir à chaque fois une image de capteur, composée de pixels, dont les valeurs de brillance et, le cas échéant, les valeurs de couleur représentent l'environnement et de manière à avoir un dispositif d'évaluation (9) dans lequel les rubans goudronnés (8) ou les joints goudronnés appliqués en tant qu'irrégularités sur la chaussée (2) sont évalués et signalés sur la base de leur brillance en ce qu'ils se distinguent de marquages (7) relatifs au guidage au sol spécifié, du fait que la largeur des irrégularités de la surface de la chaussée (2) dans chaque ligne d'image de l'image de capteur est calculée sur la base de la brillance, et **caractérisé en ce que** l'on évalue si la largeur dans la direction de déplacement du support dépasse une fluctuation prédéterminée.

8. Ensemble selon la revendication 7, **caractérisé en ce qu'**une deuxième caméra arrière (20) est prévue, la caméra arrière (20) détectant une irrégularité ou un marquage (7) qui est ensuite vérifié avec la caméra avant (4) ou bien la caméra avant (4) localise l'irrégularité ou un marquage (7) et ceux-ci sont vérifiés avec la caméra arrière (20).

9. Ensemble selon la revendication 7, **caractérisé en ce que** la caméra (4 ; 20) fonctionne avec une image divisée de façon à recevoir une image avant et arrière avec une optique correspondante.

10. Progiciel en mémoire sur un support exploitable par ordinateur, ledit progiciel comprenant des moyens de programme lisibles par ordinateur qui, lorsque le progiciel est exécuté sur un microprocesseur avec des moyens de mémorisation associés ou sur un ordinateur, ordonne à celui-ci de mettre en œuvre un procédé selon l'une des revendications 1 à 6.
